# EUROPEAN PATENT SPECIFICATION

(11) **EP 0 764 574 B1**
(45) Date of publication and mention of the grant of the patent: **13.06.2001**
(21) Application number: 95114802.2
(22) Date of filing: 20.09.1995
(51) Int. Cl.: B62K 23/06

(54) **Operating lever supporting/locking mechanism in a lever device**
Bedienungshebel Trag-/Sperrmechanismus in einer Hebeleinrichtung
Mécanisme de support/verrouilllage pour levier de commande dans un dispositif de levier

(43) Date of publication of application: 26.03.1997
(73) Proprietor: STARTING INDUSTRIAL CO., LTD., Tokyo 167 (JP)
(72) Inventor: Tsunoda, Shuhei, Gunma-gun, Gunma-ken (JP); Shimizu, Keizo, Gunma-ken (JP); Kaneniwa, Toshimichi, Gunma-ken (JP); Shibasaki, Minoru, Kitagunma-gun, Gunma-ken (JP); Morishige, Toshinori, Koto-ku, Tokyo (JP)
(74) Representative: Sperling, Rüdiger, Dipl.-Ing.

(56) References cited:
- EP-A- 0 018 929
- FR-A- 1 057 476
- FR-A- 2 659 761
- US-A- 4 316 531

## Description

The present invention relates to a lever device according to the preamble of the appended claim 1.

Generally, a steering handle of a cultivator, a rice-planter, a lawn mower, an autobicycle, or the like, is equipped with an operation lever such as a clutch operation lever, a brake operation lever, an accelerator operation lever, or the like. The operation lever is rotatably supported by a support member fixed on the handle.

To make the operation lever be supported by the support member, a rotary shaft is mounted on the operation lever and rotatably supported on the support member. Such a supporting mechanism is however a complex mechanism in which shaft bearing holes for the rotary shaft are formed in the operation lever and the support member respectively, bearings are disposed in the inside of the shaft bearing holes and the rotary shaft separate from these operation lever and the supporting member is fitted into the shaft bearing holes. There are defects that assembling is troublesome and that cost increases.

Further, for example, in order to temporarily stop a cultivator, or the like, on a slope, it is necessary to keep a state in which the brake lever is pulled. In this case, a locking mechanism in which the lever is locked by a stopper member has been put into practice instead of a measure in which the lever is kept in a pulled state manually. As such a locking mechanism known is a stopper device, for example, as disclosed in JP-B-53-53689. The conventional locking mechanism however has defects that the structure for supporting the stopper member is complex and that cost is high.

It is therefore an object of the present invention to eliminate the aforementioned defects and to provide a lever device having an operation lever supporting mechanism in which simplification in construction, easy assembling and reduction in cost can be achieved, and an operation lever locking mechanism in which simplification in construction and reduction in cost can be achieved.

In order to achieve the foregoing object, according to the present invention, there is provided a lever device comprising a support member fixed on a handle, an operation lever supporting mechanism for rotatably supporting an operation lever on the support member, and an operation lever locking mechanism for locking the operation lever in a pulled state by engaging a stopper lever supported on the operation lever with an engagement portion of the support member when the operation lever pulls a control wire, characterized in: that the operation lever supporting mechanism includes a U-shaped shaft bearing groove integrally formed in the support member so as to constitute a shaft bearing portion between the support member and the handle, and a rotary shaft portion integrally formed on the operation lever so as to act as a center of rotation of the operation lever relative to the support member, the rotary shaft portion being received in the shaft bearing groove of the support member so as to be rotatably supported between the shaft bearing groove and the outer surface of the handle; and that the lever locking mechanism includes common receptacles formed commonly in the operation lever and in the stopper lever so as to receive therein a drum formed at one end of the control wire so that the stopper lever is supported on the operation lever so as to be rotatable around the drum.

In such a configuration, the rotary shaft portion integrally formed on the operation lever is engaged with the shaft bearing groove integrally formed in the support member so as to rotatably supported between the shaft bearing groove and the outer surface of the handle to complete the assembling. Accordingly, it is not necessary that any rotary shaft for turning the operation lever is formed so as to be separated from the operation lever and that any shaft bearing portion for the rotary shaft is formed on the operation lever or the support shaft. Further, simplification can be achieved in construction and hence easy assembling and reduction in cost can be attained.

Incidentally, force substantially perpendicular to the outer surface of the handle merely acts on the rotary shaft portion in the reception groove when the operation lever turns, so that the support member does not require any special support strength.

In the operation lever locking mechanism which is configured as described above, the stopper lever is pulled together with the wire in the lengthwise direction when the operation lever is pulled, so that the stopper lever is engaged with the engagement portion of the support member to thereby lock the operation lever in a pulled state. When the stopper lever is engaged with the engagement portion, the stopper lever turns around the drum relative to the operation lever. Because the drum of the wire is used as a support shaft for supporting the stopper lever relative to the operation lever and also as a rotary shaft for rotating the stopper lever, it is not necessary to perform machining for forming any other special rotary shaft and any other special shaft bearing and to provide any other peripheral member for receiving the drum. Accordingly, the number of parts can be reduced as a whole, so that simplification in construction and reduction in cost can be achieved.

In the aforementioned locking mechanism, the stopper lever may be formed so as to be urged by a spring to engage with the engagement portion of the support member when the operation lever is pulled. When this measure is taken, the operation lever is locked automatically. Alternatively, the stopper lever may be formed so as to be manually engaged with the engagement portion of the support member when the operation lever is pulled. Because the stopper lever must be operated manually at the time of pulling the operation lever when this measure is taken, the operation lever can be locked as occasion demands.

In the locking mechanism, the engagement portion may be constituted by a first engagement portion capable of engaging with the stopper lever urged by a spring when the operation lever is pulled, and a second engagement portion capable of engaging with the stopper lever operated manually, and the engagement portion may be configured so that interchangeably selected one of the first stopper lever engaged with the first engagement portion and the second stopper lever engaged with the second engagement portion is supported on the operation lever.

In this configuration, whether the stopper lever which is automatically engaged with the first engagement portion when the operation lever is pulled is used or the stopper lever which is manually engaged with the second engagement portion when the operation lever is pulled is used can be selected optionally by interchangeably selecting one of the two kinds of stopper levers. Accordingly, an automatic lock type lever device and a manual lock type lever device can be produced individually by selecting either one of the two kinds of stopper levers with respect to the common support member and the common operation lever.

The present invention will be described below in detail on the basis of embodiments thereof with reference to accompanying drawings.

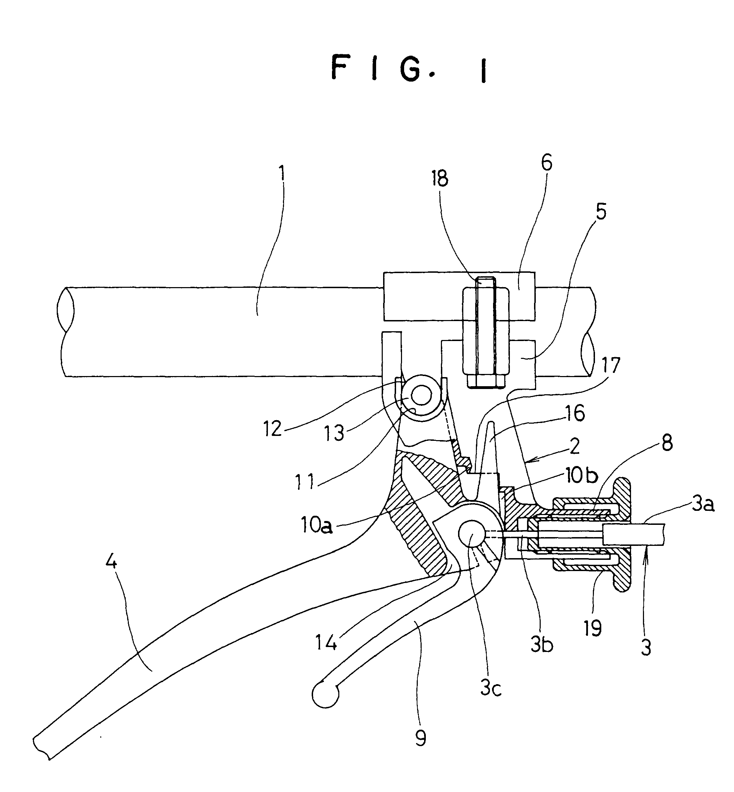

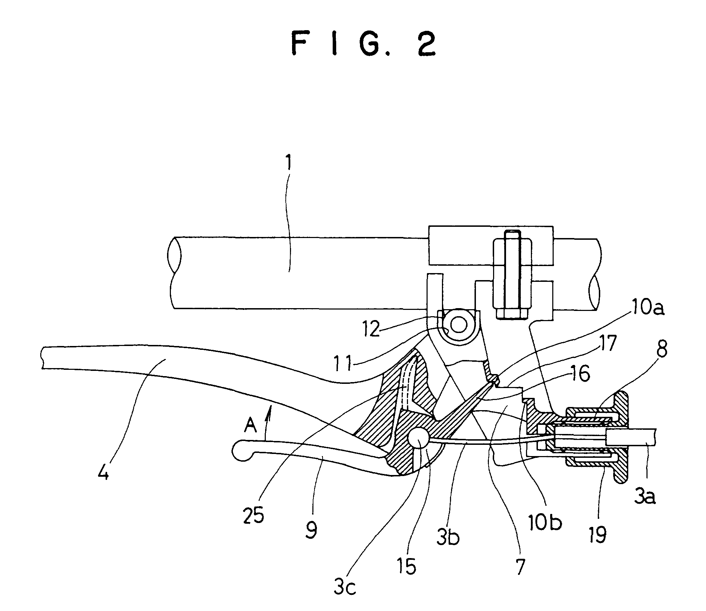

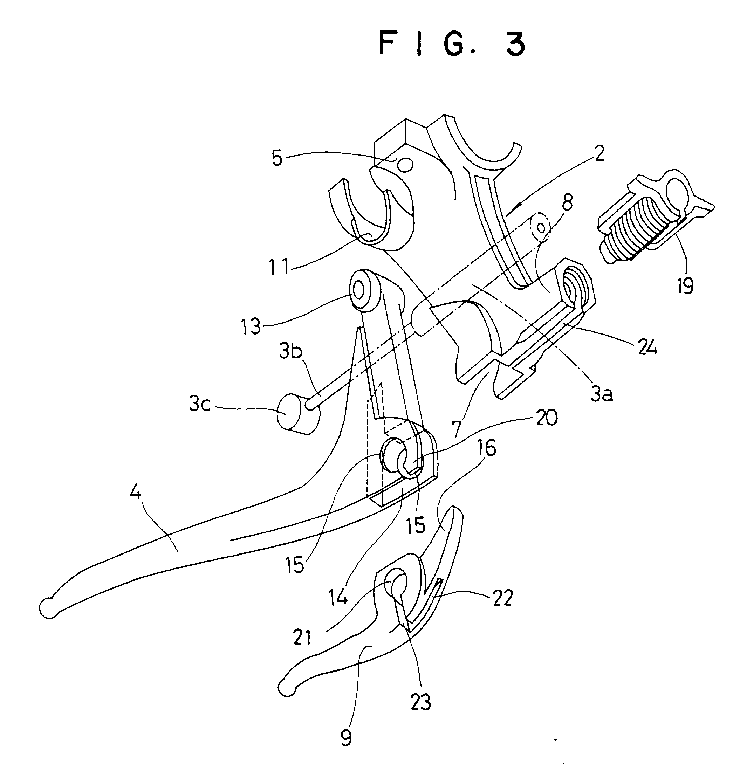

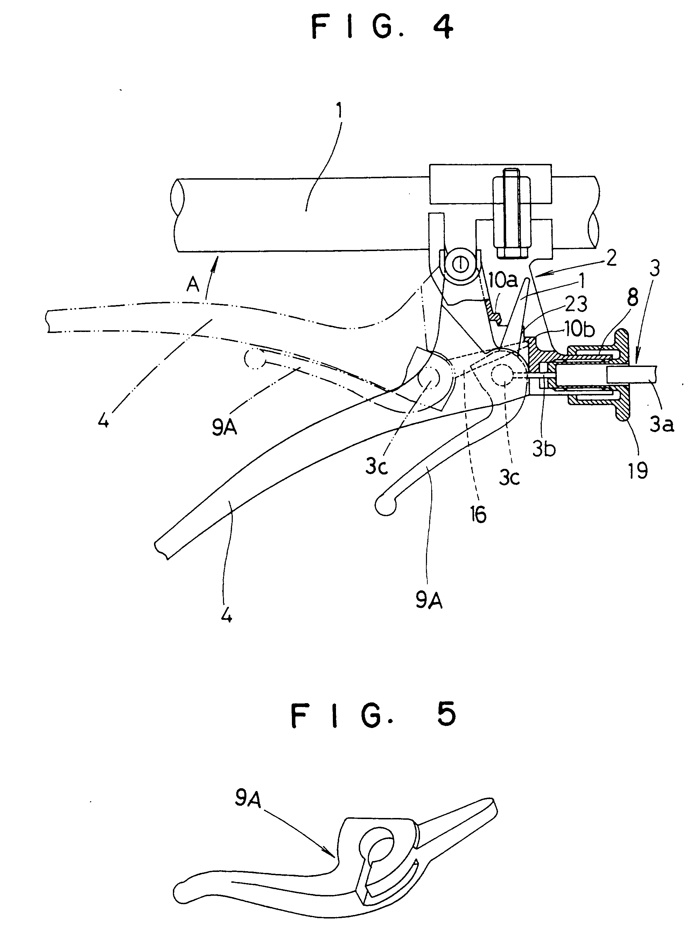

Fig. 1 is a side view showing a supporting mechanism and a locking mechanism in a lever device according to a first embodiment of the present invention; Fig. 2 is a view for explaining an operative state thereof; Fig. 3 is an exploded perspective view of a main part thereof; Fig. 4 is a side view of a supporting mechanism and a locking mechanism in a lever device according to a second embodiment of the present invention; and Fig. 5 is a perspective view of a stopper lever thereof.

Referring now to Figs. 1 through 3, mechanisms for supporting and locking an operation lever in the lever device according to the first embodiment of the present invention will be described.

In Figs. 1 to 3, a handle 1 of a cultivator, a rice-planter, a lawn mower, an autobicycle, or the like, is equipped with a lever device. The lever device comprises a support member 2 fixed on the handle 1, and an operation lever 4 rotatably supported on the support member 2 and for operating a control wire 3 of a mechanism such as a clutch, a brake, an accelerator, or the like. The wire 3 is constituted by an outer wire 3a and an inner wire 3b. A cylindrical drum 3c is integrally formed at an end of the inner wire 3b.

A mount portion 5 formed at a base portion of the support member 2 and a bolt bearing member 6 being in contact with the outer surface of the handle 1 so as to be opposite to the mount portion 5 are tightened by a bolt 18 to thereby fix the support member 2 on the handle 1. A reception groove 7 for receiving a base portion of the operation lever 4 is formed at a center portion of the support member 2. A cylindrical portion 8 for receiving the wire 3 and an engagement portion 10 capable of engaging with a stopper lever 9 are formed separately in the front portion of the lever device.

A portion of the reception groove 7 is opened to the outer surface of the handle 1. On a side wall of this portion, a U-shaped shaft bearing groove 11 is formed continuously to constitute a shaft bearing portion between the shaft bearing groove 11 and the outer surface of the handle 1. A choke portion 12 is formed in the middle portion of the shaft bearing groove 11 so as to be narrowed slightly inward.

A rotary shaft portion 13 which is the center of rotation of the operation lever 4 relative to the support member 2 is integrally formed on a side surface of the base portion of the operation lever 4 so as to project. The rotary shaft portion 13 is received in the shaft bearing groove 11 of the support member 2 and rotatably supported between the shaft bearing groove 11 and the outer surface of the handle 1, by which the operation lever 4 is supported so as to be rotatable around the rotary shaft portion 13.

In order to assemble the operation lever 4, the operation lever 4 is received in the reception groove 7 of the support member 2; the rotary shaft portion 13 integrally formed on the operation lever 4 is engaged with the shaft bearing groove 11 integrally formed in the support member 2; the support member 2 together with the bolt bearing member 6 is fixed on the handle 1 by the bolt 18 as described above; and the rotary shaft portion 13 is rotatably supported between the shaft bearing groove 11 and the outer surface of the handle 1. Thus, assembling the operation lever 4 is finished. Incidentally, this assembling work is very easy because the rotary shaft portion 13 is held by the choke portion 12 so as not to slip out of the shaft bearing groove 11 when the rotary shaft portion 13 is engaged with the shaft bearing groove 11.

Further, the cylindrical portion 8 for receiving the wire 3 is formed in the front portion of the support member 2. The outer wire 3a of the wire 3 is received in the cylindrical portion 8. The inner wire 3b provided in the inside of the outer wire 3a is led out from the cylindrical portion 8 to the operation lever 4 side. Incidentally, the reference numeral 19 designates a wire adjuster.

A slot 14 for receiving the stopper lever 9 is formed in the operation lever 4 so that the stopper lever 9 is rotatably arranged in the slot 14. On the opposite side walls of the slot 14, receptacles 15 are formed so as to receive the drum 3c therein. A slit 20 for leading-in the wire 3 is formed in one of the receptacles 15.

A projecting piece 16 is formed at one end of the stopper lever 9. The projecting piece 16 projects out of an opening 17 formed in the support member 2. An engagement portion 10 of the projecting piece 16 is formed in the inside of the opening 17. A receptacle 21 for the drum 3c is formed in the middle portion of the stopper lever 9. A guide 22 for the wire 3 and a slit 23 for leading the wire 3 into the guide 22 are formed in the receptacle 21. The drum 3c of the wire 3 led out of the cylindrical portion 8 is fitted into the receptacle 21 provided in the stopper lever 9 and into the receptacles 15 provided in the operation lever 4 in common, so that the stopper lever 9 is supported on the operation lever 4 so as to be rotatable around the drum 3c.

To assemble the stopper lever 9 to the operation lever 4, the slot 14 is revealed from the support member 2 by turning the operation lever 4; the stopper lever 9 is received in the inside of the slot 14 of the operation lever 4; and while the wire 3 is led to the guide 22 of the stopper lever 9 through the slits 20 and 23 in the condition that the slits 20 and 23 are aligned, the drum 3c of the wire 3 is fitted, from the receptacle 15 on one side wall of the operation lever 4, into the receptacle 21 of the stopper lever 9 and the receptacle 15 on the other side wall of the operation lever 4. As a result, the stopper lever 9 is supported on the operation lever 4 so as to be rotatable around the drum 3c.

The cylindrical portion 8 serves to make the wire 3 pass. The outer wire 3a is put in the inside of the cylindrical portion 8. A slit 24 for leading the inner wire 3b into the cylindrical portion 8 is formed in the cylindrical portion 8. The outer wire 3a is put in the inside of the cylindrical portion 8 whereas the inner wire 3b led out of the bottom wall of the cylindrical portion 8 is guided by the guide 22 of the stopper lever 9 and has an end connected to the stopper lever 9 and the operation lever 4 through the drum 3c.

The engagement portion 10 formed in the inside of the opening 17 communicated with the operation lever reception groove 7 of the support member 2 is constituted by a first engagement portion 10a (engaged with the stopper lever 9 as will be described later) near the handle 1 side, and a second engagement portion lOb (engaged with the stopper lever 9 as will be described later) near the wire 3 side. Before the operation lever 4 turns, the projecting piece 16 of the stopper lever 9 projects out of the opening 17.

In the aforementioned configuration, the operation lever supporting mechanism according to the present invention is adapted to a lever device having a support member 2 fixed on a handle 1, and an operation lever 4 rotatably supported on the support member 2, and is configured so that a U-shaped shaft bearing groove 11 constituting a shaft bearing portion between the shaft bearing groove 11 and the outer surface of the handle 1 is integrally formed in the support member 2; that a rotary shaft portion 13 which is the center of rotation of the operation lever 4 relative to the support member 2 is integrally formed in the operation lever 4, and so that the rotary shaft portion 13 is put in the shaft bearing groove 11 of the support member 2 and rotatably supported between the shaft bearing groove 11 and the outer surface of the handle 1.

Because as described above, the rotary shaft portion 13 is integrally formed in the operation lever 4 and put in the shaft bearing groove 11 integrally formed in the support member 2 so that the rotary shaft portion 13 is rotatably supported between the shaft bearing groove 11 and the outer surface of the handle 1, it is unnecessary that a rotary shaft for turning the operation lever 4 is formed so as to be separated from the operation lever 4 and that a shaft bearing portion for the rotary shaft is formed in the operation lever 4 or the support member 2.

To assemble the operation lever 4, the operation lever 4 is put in the reception groove 7 of the support member 2, the rotary shaft portion 13 integrally formed on the operation lever 4 is engaged with the shaft bearing groove 11 integrally formed in the support member 2, and the support member 2 is fixed on the handle 1 by the bolt 18 in the aforementioned manner so that the rotary shaft portion 13 is rotatably supported between the shaft bearing groove 11 and the outer surface of the handle 1. Thus, assembling the operation lever 4 is completed. Accordingly, the assembling work is very easy. Hence obtained is the operation lever supporting mechanism which is simple in construction and easy to assemble and in which cost can be reduced.

Incidentally, the support member does not require any special support strength, because force substantially perpendicular to the surface of the handle 1 merely acts on the rotary shaft portion 13 in the reception groove when the operation lever 4 turns.

Incidentally, each of the support member 2, the operation lever 4 and the stopper lever 9 can be produced by injection molding of synthetic resin or by diecast molding of metal.

Further, in the aforementioned configuration of the present invention, a mechanism for automatically locking the operation lever is provided. That is, in a lever device having a support member 2 fixed on a handle 1, an operation lever 4 rotatably supported on the support member 2 and for pulling a control wire 3, and a stopper lever 9 supported on the operation lever 4 so that the operation lever 4 is locked in a pulled state by engagement of the stopper lever 9 with an engagement portion 10a of the support member 2, the mechanism is configured so that common receptacles 15 and 21 for receiving a drum 3c formed at an end of the wire 3 are formed in the operation lever 4 and the stopper lever 9 and the stopper lever 9 is supported on the operation lever 4 so as to be rotatable around the drum 3c.

Incidentally, when the operation lever 4 is pulled toward the handle 1 side, the wire 3 as well as the stopper lever 9 is pulled in the lengthwise direction. In this occasion, the projecting piece 16 of the stopper lever 9 enters into the inside of the opening 17 of the support member 2 and the wire 3 is bent between the wire 3 lead-in groove 22 and the cylindrical portion 8 of the support member 2 (see Fig. 2), so that the projecting piece 16 of the stopper lever 9 is urged to turn to the first engagement portion 10a side.

In the aforementioned configuration, the wire 3 as well as the stopper lever 9 is pulled in the lengthwise direction by pulling the operation lever 4 to the handle 1 side, so that the projecting piece 16 of the stopper lever 9 enters into the inside of the opening 17. In this occasion, the stopper lever 9 is turned around the drum 3c by bending of the wire 3, so that the projecting piece 16 is urged to turn to the first engagement portion 10a side. Accordingly, the projecting piece 16 of the stopper lever 9 is automatically engaged with the first engagement portion 10a of the support member 2. Accordingly, the operation lever 4 is locked in a pulled state.

When the stopper lever 9 is then pulled so as to be turned around the drum 3c in order to release the projecting piece 16 from the engagement portion 10a, the operation lever 4 is unlocked so that the operation lever 4 is pulled by the wire 3 and turned reversely so that the operation lever 4 as well as the stopper lever 9 returns to its initial position.

Because as described above, the drum 3c of the wire 3 is used as a support shaft for supporting the stopper lever 9 on the operation lever 4 and also as a rotary shaft for the stopper lever 9, it is unnecessary that any special rotary shaft and any special shaft bearing are machined and that any special peripheral member for receiving the drum 3c is provided. Accordingly, the number of parts can be reduced as a whole, so that simplification in construction and reduction in cost can be achieved.

A manual lock mechanism will be described below as another embodiment of the lever device according to the present invention. Fig. 4 is a side view of the lever device thereof; and Fig. 5 is a perspective view of the stopper lever 9A thereof. Also in this embodiment, the support member 2 and the operation lever 4 are configured in the same manner as in the previous embodiment. Accordingly, like numerals refer to like parts, for simplification of description.

The basic structure of the stopper lever 9A is the same as that of the stopper lever 9 described in the previous embodiment. The stopper lever 9A is however formed so that no force acts to turn the projecting piece 16 of the stopper lever 9A when the operation lever 4 is in a pulled state, and that the wire 3 is bent when the stopper lever 9A is forcedly turned.

In the aforementioned configuration, the wire 3 as well as the stopper lever 9A is pulled in the lengthwise direction by pulling the operation lever 4, so that the projecting piece 16 of the stopper lever 9A enters into the inside of the opening 17 but the end of the projecting piece 16 merely faces the opening 17. In this condition, the stopper lever 9A is pulled in the same direction as the operation lever 4 and turned around the drum 3c to thereby turn the projecting piece 16 of the stopper lever 9A, and then the pulling of the operation lever 4 is loosened to thereby engage the projecting piece 16 of the stopper lever 9A with the second engagement portion 10b of the support member 2. Accordingly, the operation lever 4 is held in a pulled state. Incidentally, the operation lever 4 is in a state in which the operation lever 4 is slightly detached from the handle 1.

When the operation lever 4 is then pulled up again in the direction of the arrow A of Fig. 4 to strike on the handle 1, the stopper lever 9A is pulled back to release the projecting piece 16 from the second engagement portion 10b and the projecting piece 16 is automatically turned by the tensile force of the wire 3 so as to face the opening 17. When the operation of pulling the operation lever 4 is then released, the operation lever 4 as well as the stopper lever 9A is turned so as to go back to its initial position.

Incidentally, in each of the aforementioned embodiments, the force for urging the stopper lever 9 (or 9A) to turn may be formed by the wire 3 as described above or may be formed by a spring 25 which is formed integrally or separately on the stopper lever 9 (or 9A) as shown by the broken line in Fig. 2.

Further, each of the support member 2, the operation lever 4 and the stopper lever 9A can be produced by injection molding of synthetic resin or by diecast molding of metal.

Further, the structure of the operation lever 4 in the first embodiment shown in Figs. 1 to 3 and the structure of the operation lever 4 in the second embodiment shown in Figs. 4 and 5 are quite the same, so that the support member 2 and the operation lever 4 can be used in common to the two embodiments if the first and second engagement portions 10a and lOb corresponding to the two embodiments are formed in the support member 2. Accordingly, either one of the embodiments may be desiredly selected only by making exchange between the stopper lever 9 and the stopper lever 9A. Accordingly, an automatic lock type lever device and a manual lock type lever device can be produced individually if either one of the two types of stopper levers 9 and 9A is selected for the common support member 2 and the common operation lever 4. The type to be selected may be decided in accordance with the kind of the machine on which the stopper device is mounted, that is, on which one of a cultivator, a rice-planter, a lawn mower, an autobicycle, etc. is mounted, or in accordance with the kind of the mechanism to be connected to the stopper device, that is, the fact that which one of a clutch, a brake, an accelerator, etc. is connected to the stopper device.

## Claims

1. A lever device comprising
a support member (2) fixed on a handle (1),
an operation lever supporting mechanism for rotatably supporting an operation lever (4) on said support member (2), and
an operation lever locking mechanism for locking said operation lever (4) in a pulled state by engaging a stopper lever (9, 9A) supported on said operation lever (4) with an engagement portion (10) of said support member (2) when said operation lever (4) pulls a control wire (3),
said lever device **characterized** in that
said operation lever supporting mechanism includes an U-shaped shaft bearing groove (11) integrally formed in said support member (2) so as to constitute a shaft bearing portion between said support member (2) and said handle (1), and
a rotary shaft portion (13) integrally formed on said operation lever (4) so as to act as a center of rotation of the operation lever (4) relative to said support member (2),
said rotary shaft portion (13) being received in said shaft bearing groove (11) of said support member (2) so as to be rotatably supported between said shaft bearing groove (11) and the outer surface of said handle (1); and
in that said lever locking mechanism includes common receptacles (15, 21) formed commonly in said operation lever (4) and in said stopper lever (9, 9A) so as to receive therein a drum (3c) formed at one end of said control wire (3) so that said stopper lever (9, 9A) is supported on said operation lever (4) so as to be rotatable around said drum (3c).

2. A lever device according to claim 1 **wherein** said stopper lever (9, 9A) is urged to engage with said engagement portion (10) of said support member when said operation lever is pulled.

3. A lever device according to claim 1, **wherein** said stopper lever (9, 9A) is formed so as to be engaged with an engagement portion (10b) manually when said operation lever portion is pulled.

4. A lever device according to claim 1, **wherein** said engagement portion is constituted by a first engagement portion (10a) capable of engaging with a first stopper lever (9) which is urged by a spring when said operation lever is pulled, and a second engagement portion (10b) capable of engaging with a second stopper (9A) operated manually, and that either one of said first and second stopper levers is supported interchangeably there between.

## Patentansprüche

1. Hebelvorrichtung, enthaltend:
ein an einem Handgriff (1) befestigtes Halteelement (2),
einen Betätigungshebelhaltemechanismus zum schwenkbaren Haltern eines Betätigungshebels (4) an dem Halteelement (2), und
einen Betätigungshebel-Verriegelungsmechanismus zum Verriegeln des Betätigungshebels (4) in gezogenem Zustand, indem ein Verriegelungshebel (9, 9A), der an dem Betätigungshebel (4) gehaltert ist, mit einem Eingriffsabschnitt (10) des Halteelements (2) in Eingriff gebracht wird, wenn der Betätigungshebel (4) einen Steuerdraht (3) zieht,
welche Hebelvorrichtung dadurch gekennzeichnet ist, daß
der Betätigungshebelhaltemechanismus eine U-förmige Achslagernut (11) enthält, die einstückig in dem Halteelement (2) geformt ist, so daß sie einen Achslagerabschnitt zwischen dem Halteelement (2) und dem Handgriff (1) bildet, und
ein Schwenkachsabschnitt (13) an dem Betätigungshebel (4) einstückig angeformt ist, so daß er als Mittelpunkt der Schwenkbewegung des Betätigungshebels (4) relativ zu dem Halteelement (2) wirkt,
der Schwenkachsabschnitt (13) in der Achslagernut (11) des Halteelements (2) in der Weise aufgenommen ist, daß er zwischen der Achslagernut (11) und der äußeren Oberfläche des Handgriffs (1) schwenkbar gehaltert ist; und
dadurch, daß der Hebelverriegelungsmechanismus gemeinsame Aufnahmen (15, 21) enthält, die gemeinsam in dem Betätigungshebel (4) und in dem Verriegelungshebel (9, 9A) gebildet sind, um darin einen an einem Ende des Steuerdrahtes (3) gebildeten Nippel (3c) aufzunehmen, so daß der Verriegelungshebel (9, 9A) an dem Betätigungshebel (4) in der Weise gehaltert ist, daß er um den Nippel (3c) schwenkbar ist.

2. Hebelvorrichtung nach Anspruch 1, bei welcher der Verriegelungshebel (9, 9A) dann, wenn der Betätigungshebel gezogen wird, so beaufschlagt wird, daß er mit dem Eingriffsabschnitt (10) des Halteelements in Eingriff kommt.

3. Hebelvorrichtung nach Anspruch 1, bei welcher der Verriegelungshebel (9, 9A) so gebildet ist, daß er mit einem Eingriffsabschnitt (10b) manuell in Eingriff bringbar ist, wenn der Betätigungshebel gezogen wird.

4. Hebelvorrichtung nach Anspruch 1, bei welcher der Eingriffsabschnitt durch einen ersten Eingriffsabschnitt (10a), der mit einem federbeaufschlagten ersten Verriegelungshebel (9) in Eingriff kommen kann, wenn der Betätigungshebel gezogen wird, und einen zweiten Eingriffsabschnitt (10b) gebildet ist, der mit einer zweiten Verriegelung (9A) in Eingriff kommen kann, die manuell betätigt wird, wobei entweder der erste oder der zweite Verriegelungshebel auswechselbar gehaltert ist.

## Revendications

1. Un dispositif à levier incluant:
un membre de support (2) fixé sur une poignée (1),
un mécanisme de support de levier de commande pour supporter un levier de commande pivotant (4) sur ledit membre de support (2), et
un mécanisme de verrouillage de levier de commande pour verrouiller ledit levier de commande (4) en position de traction par engagement d'un levier de blocage (9, 9A) supporté sur ledit levier de commande (4) par une section d'engagement (10) dudit membre de support (2) lorsque ledit levier de commande (4) exerce une traction sur un câble de commande (3),
le dispositif à levier etant caracterisé en ce que
ledit mécanisme de support de levier de commande inclut un logement en forme de U (11) de support d'arbre formé intégralement dans ledit membre de support (2) de manière à constituer une section palier d'arbre entre ledit membre de support (2) et ladite poignée (1), et une section arbre de rotation (13) formée intégralement sur ledit levier de commande (4) de manière à servir de centre de rotation du levier de commande (4) par rapport au dit membre de support (2),
ladite section arbre de rotation (13) prend place dans ledit logement de support d'arbre (11) du dit membre de support (2) de manière à permettre le pivotement entre ledit logement de support d'arbre (11) et la surface extérieure de ladite poignée (1), et
que ledit mécanisme de verrouillage de levier inclut des réceptacles communs (15, 21) formés ensemble dans ledit levier de commande (4) et dans ledit levier de blocage (9, 9A) de manière à recevoir un tambour (3c) formé à l'une des extrémités du dit câble de commande (3) de sorte que ledit levier de blocage (9, 9A) est supporté sur ledit levier de commande (4) de manière à pouvoir pivoter autour du dit tambour (3c).

2. Un dispositif à levier selon la spécification 1, caracterisé en ce que ledit levier de blocage (9, 9A) est forcé de s'engager dans la section d'engagement (10) du dit membre de support en cas de traction sur le levier de commande.

3. Un dispositif à levier selon la spécification 1, caracterisé en ce que ledit levier de blocage (9, 9A) est formé de manière à s'engager manuellement dans une section d'engagement (10b) en cas de traction sur le levier de commande.

4. Un dispositif à levier selon la spécification 1, caracterisé en ce que ladite section d'engagement est constituée d'une première section d'engagement (10a) capable de s'engager avec un premier levier de blocage (9) actionné par un ressort lorsqu'une traction est exercée sur ledit levier de commande, et une seconde section d'engagement (10b) capable de s'engager avec un second levier de blocage (9a) actionné manuellement et que l'un ou l'autre des dits premier et second leviers de blocage est supporté de manière interchangeable là-entre.
